Europäisches Patentamt

European Patent Office

Office européen des brevets

(19)

(11) **EP 1 289 305 A2**

(12) ## EUROPEAN PATENT APPLICATION

(43) Date of publication:
05.03.2003 Bulletin 2003/10

(51) Int Cl.⁷: **H04N 7/52**

(21) Application number: **02251129.9**

(22) Date of filing: **19.02.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **07.08.2001 JP 2001238691**
**29.10.2001 JP 2001330114**

(71) Applicant: **Hitachi Ltd.**
**Tokyo (JP)**

(72) Inventors:
• **Torikoshi, Shinobu, c/o Hitachi, Ltd.**
**Tokyo 100-8220 (JP)**

• **Ono, Koichi, c/o Hitachi, Ltd.**
**Tokyo 100-8220 (JP)**
• **Kuroda, Yoshiaki, c/o Hitachi, Ltd.**
**Tokyo 100-8220 (JP)**
• **Nagasato, Katsumi, c/o Hitachi, Ltd.**
**Tokyo 100-8220 (JP)**
• **Hosono, Atsushi,**
**c/o Hitachi ULSI System Co., Ltd**
**Kodaira-shi, Tokyo 187-8522 (JP)**

(74) Representative: **Calderbank, Thomas Roger et al**
**MEWBURN ELLIS**
**York House**
**23 Kingsway**
**London WC2B 6HP (GB)**

(54) **Digital signal processing device, DV decoder, recording device using DV decoder, and signal processing method**

(57) The invention uses: a clock signal generator (106) for generating a clock signal asynchronized with an input signal; a frequency dividing unit (105) for frequency dividing the clock signal outputted from the clock signal generator (106) and outputting a predetermined clock enable signal; a digital interface processor (107) for separating and outputting a compressed video image, audio information, and the like from a compressed digital signal in response to the clock enable signal outputted from the frequency dividing unit (105); a video processing unit (103) for decoding the compressed video information outputted from the digital interface processor (107), obtaining a video signal, and synchronizing it with the input signal; and an audio processing unit (104) for decoding the audio information outputted from the digital interface processor (107), obtaining a audio signal, and outputting the audio signal at synchronous timing according to an audio operating mode.

FIG. 1

## Description

The invention relates to a device for decoding video and audio signals which were digitally compressed. More particularly, the invention relates to a digital signal processing device and a DV decoder, in which in a decoding process of a digital video cassette recorder which conforms with a DV standard, a digital video signal and a digital audio signal which are obtained from an interface of what is called an IEEE1394 standard are processed by a single clock and, at the same time, the video signal and the audio signal are synchronized by using a frame synchronization principle, and relates to a recording device using the DV decoder and a signal processing method.

As a transmission standard of a digital signal which has frequently been used in recent years, for example, there is an IEEE1394 standard. Attention is paid to the IEEE1394 standard as a standard which is suitable for a multimedia application such as connection of digital video cassette recorders, connection of the digital video cassette recorder and a personal computer, or the like.

Formats of the digital video signal and digital audio signal in the IEEE1394 standard have been disclosed in "Specifications of Consumer-Use Digital VCRs using 6.3mm magnetic tape [HD DIGITAL VCR CONFERENCE]" (hereinafter, referred to as a DV standard). According to the DV standard, a compressed signal is transmitted on a 1394 bus as data of a packet unit in which an isochronous header, a CIP (Common Isochronous Packet) header, and a CRC (Cyclic Redundancy Check) have been added to video/audio data of 480 bytes. The CIP header includes time information for synchronization (SYT: SyncTime) in order to obtain synchronization among a plurality of devices for transmitting and receiving the data via the 1394 bus. Usually, since output video signal timing obtained after decoding is generated with reference to the SYT, a PLL for video is necessary for the purpose of forming a clock that is phase-locked with the SYT.

According to the DV standard, since an unlocked mode in which there is an asynchronous relation between the video signal and the audio signal exists, in this case, a PLL for audio is also necessary in addition to the PLL for video.

In case of considering a connection of the device which conforms with the DV standard and another system, since there is also a case where the unlocked mode of audio as in the DV standard is not permitted, it is necessary to synchronously output the video signal and the audio signal.

According to JP-A-11-317916, therefore, there has been proposed a construction such that in order to synchronize the audio signal in the DV standard with the video signal, a decoding process is executed by the audio PLL first, new synchronization is subsequently formed by using a second audio PLL using synchronization on the video signal side, and a sampling rate converting process of the audio signal is executed by using the new synchronization, thereby obtaining synchronization of the video signal and audio signal.

In case of integrating a digital circuit into an LSI, it is desirable to use a single clock in order to improve design efficiency and guarantee the stable operation. It is also desirable that the number of pins of the LSI is as small as possible in order to reduce manufacturing costs of the LSI itself, realize ease of design of a circuit board for mounting the LSI, improve production efficiency, and suppress a rate of occurrence of defects.

However, since the foregoing conventional example uses a construction using at least two or more clocks, there is a drawback such that timing design and timing verification upon LSI designing are complicated.

When the stable operation is guaranteed, since a plurality of clocks exist not only in the LSI but also on the circuit board on which the LSI is mounted, they increase factors of generation of crosstalks between the clocks and noises. In this case, a board designing technique for suppressing the crosstalks and noises, parts for preventing interference, and the like are necessary.

In the foregoing conventional example, at least two or more PLLs for clock generation exist. In case of constructing the PLL, usually, an LPF which is externally attached is necessary for integrating an output indicative of a phase comparison result. Further, external pins only for use of inputs and outputs of those PLLs are necessary. Consequently, the number of parts on the circuit board increases inevitably and, at the same time, the board design is made complicated due to an influence by the increase in number of pins of the LSI, so that total costs also rise.

Therefore, according to the invention, there are used: a clock generator for generating a reference clock; a video signal processing unit which is made operative by the reference clock, executes a decoding process of a video signal, and performs synchronization, on a frame unit basis, of input side frame reference timing which is obtained on the basis of sync time information and frame reference timing for output which is obtained by frequency dividing the reference clock; and an audio signal processing unit which is made operative by the reference clock, executes a process of an audio signal, detects a difference between periods of the input side frame reference timing and the frame reference timing for output, and corrects the number of samples in accordance with the detected period difference.

The period difference between the input side frame reference timing and the frame reference timing for output is detected and the number of samples according to the period difference is obtained, thereby correcting the number of samples. That is, by correcting the number of samples by presuming that the number of samples in one frame period in which the frame reference timing for output is used as a reference is set to the number of samples of one frame of the audio signal, the audio signal synchronized with the frame reference timing for output can be processed by one clock generator.

Further, by performing the synchronization of the input side frame reference timing and the frame reference timing for output on a frame unit basis, the video signal can be also synchronized with the frame reference timing for output. The audio signal and video signal synchronized with the frame reference timing for output can be obtained by one clock generator.

By transforming the number of samples of the audio signal into the number of samples specified in a locked mode, the synchronized audio signal and video signal according to the locked mode can be obtained. An output signal which can be processed even if it is outputted to a device which does not correspond to the locked mode can be obtained.

Other objects, features and advantages of the invention will become apparent from the following description of the embodiments of the invention taken in conjunction with the accompanying drawings.

These and other features, objects and advantages of the present invention will become more apparent from the following description when taken in conjunction with the accompanying drawings wherein:

Fig. 1 is a block diagram showing the first embodiment of a digital signal processing device according to the invention;

Fig. 2 is a block diagram showing details of a video decoding processor 109 in the first embodiment;

Fig. 3 is a block diagram showing details of a video synchronizer 110 in the first embodiment;

Fig. 4 is an explanatory diagram showing details of the deshuffling operation in the video synchronizer 110 in the first embodiment;

Fig. 5 is a timing chart showing the deshuffling operation in the video synchronizer 110 in the first embodiment;

Figs. 6A and 6B are timing charts showing the frame synchronizing operation in the video synchronizer 110 in the first embodiment;

Fig. 7 is a block diagram showing details of an audio processing unit 104 in the first embodiment;

Fig. 8 is an explanatory diagram showing details of an operating mode of the audio processing unit 104 in the first embodiment;

Fig. 9 is a timing chart showing a sampling transformation principle in a sampling transform processor 113 in the first embodiment;

Fig. 10 is a timing chart showing the sampling transformation principle in the sampling transform processor 113 in the first embodiment; and

Fig. 11 is a diagram showing a hard disk recorder using a digital signal processing unit described in the first embodiment.

An embodiment of the invention will be described in detail hereinbelow with reference to the drawings.

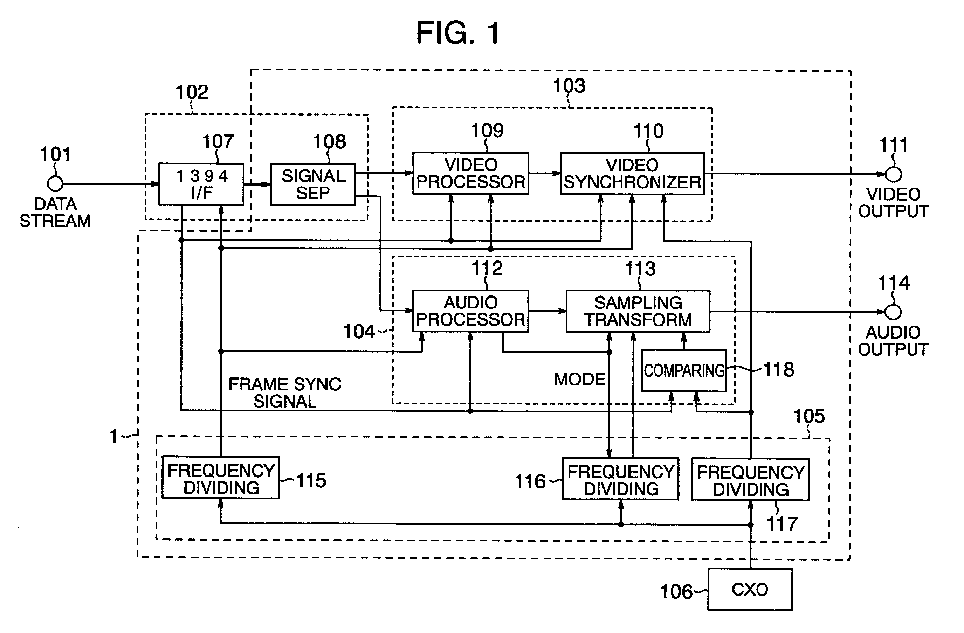

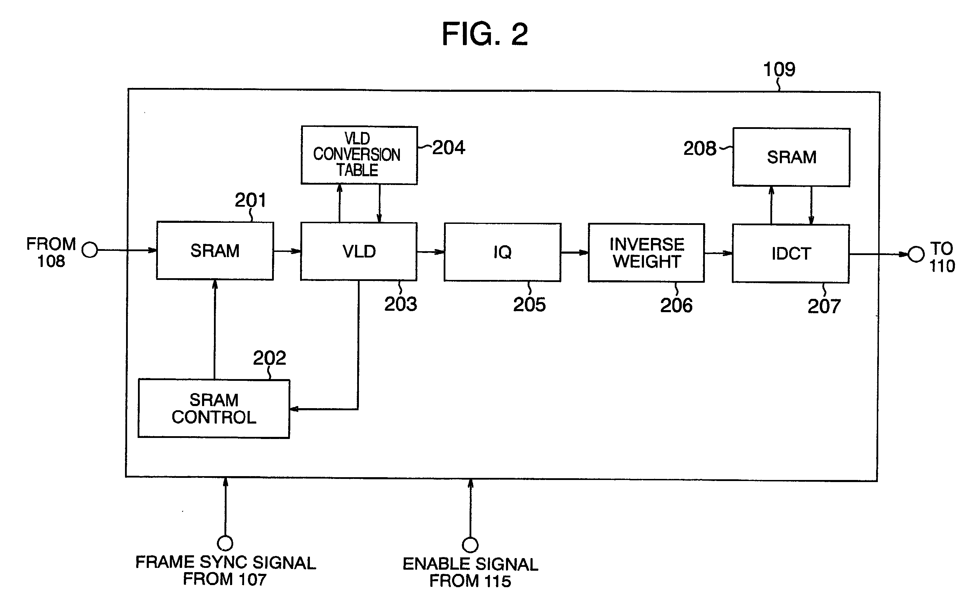

Fig. 1 shows an example of a construction in the invention. The operation thereof will be explained also with reference to Figs. 2 to 8 showing an internal constructional example and its operation principle.

In Fig. 1, reference numeral 107 denotes an IEEE1394 interface processor; 108 a signal separation processor; 109 a video decoding processor (hereinafter, referred to as a video processor); 110 a video signal synchronization processor (hereinafter, referred to as a video synchronizer); 111 a video signal output terminal; 112 an audio decoding processor (hereinafter, referred to as an audio processor); 113 a sampling transform processor; 114 an audio signal output terminal; 115 a frequency dividing circuit (clock divider) for an input signal process; 116 a frequency dividing circuit (clock divider) for an audio signal outputting process; 117 a frequency dividing circuit (clock divider) for video output frame synchronization generation; 118 a phase comparator; and 106 a fixed clock generator. A fixed clock is referred to as a system clock hereinbelow.

The processors 107 and 108 are collectively referred to as an input processing unit 102; the processors 109 and 110 are collectively referred to as a video processing unit 103; the processors 112 and 113 are collectively referred to as an audio processing unit 104; and the circuits 115, 116, and 117 are collectively referred to as a frequency dividing unit 105. Further, a portion (1) surrounded by a broken line, that is, the video processing unit 103, audio processing unit 104, frequency dividing unit 105, and signal separation processor 108 are referred to as a DV decoder. The DV decoder is constructed by one chip. A DV decoder formed as one chip by adding the IEEE1394 interface processor 107 to the DV decoder 1 can be also constructed.

Further, although not specifically shown in Fig. 1, the system clock is supplied as a clock to all blocks after an output unit of the IEEE1394 interface processor 107.

In order to receive an input signal, as a fundamental clock, the IEEE1394 interface processor 107 uses a frequency 24.576 MHz synchronized with an operation reference frequency of an IEEE1394 interface. However, to make an interface with peripheral devices easy, the processor 107 uses a construction for obtaining an output synchronized with the fundamental clock of a digital signal processing device which is asynchronized with it. For example, data existing on an IEEE1394 bus is managed on the basis of a unit called one packet. Header information called an isochronous header, header information called a CIP header, and DV data exist in one packet. Those data is managed by the fundamental clock of 24.576 MHz. Time information is included in the CIP header information and an input side frame sync signal is formed by using it. The input side frame sync signal is outputted synchronously with a clock that is inputted from an outside. The input side frame sync signal shows input side reference timing. The DV data is once written into an FIFO (First In First Out) by using the fundamental clock and read out by using the reference clock.

That is, it is not always necessary that the clock for data output which is necessary here is locked with the frame synchronization of the input. Therefore, according to the invention, the system clock is frequency divided by the input signal processing frequency dividing circuit 115 and connected as a clock enable signal for an input process to the IEEE1394 interface processor 107 together with the system clock as a pair. That is, although the fundamental clock is the system clock, by using it together with the enable signal, the data apparently changes at a period of the clock enable signal for the input process.

For example, assuming that the system clock is set to 54 MHz, the clock enable signal for the input process is set to 13.5 MHz, and a width of output data bus of the IEEE1394 interface processor 107 is set to 8 bits, data transfer ability of 13.5 MHz $\times$ 8 bits = 108 Mbps is obtained. On the other hand, since the compressed signal of the DV standard has a data rate of about 25 Mbps, sufficient data transfer ability is obtained as an enable signal which handles the data. Naturally, it is assumed that a control is performed in consideration of a capacity of the FIFO lest an overflow or an underflow occurs.

The clock enable signal for the input process can be easily obtained by frequency dividing the system clock into 1/4. As mentioned above, the IEEE1394 interface processor 107 receives the system clock and the clock enable signal for the input process formed by frequency dividing on the basis of the system clock, separates the data according to the DV standard from the data which is inputted by the IEEE1394 standard, outputs the separated data, and at the same time, outputs the input side frame sync signal.

The signal separation processor 108 separates video data and audio data on the basis of the header information from the data according to the DV standard which is outputted from the IEEE1394 interface processor 107, and outputs the separated data.

A signal process of the video data will be first explained hereinbelow.

In the video processing unit 103, the video processor 109 has a construction shown in Fig. 2. In Fig. 2, reference numerals 201 and 208 denote SRAMs; 202 an SRAM control; 203 a variable length decoding (hereinafter, referred to as VLD) processor; 204 a VLD conversion table; 205 an inverse quantization (hereinafter, referred to as IQ) processor; 206 an inverse weight processor; and 207 an inverse discrete cosine transform (hereinafter, referred to as IDCT) processor.

The video processor 109 first stores the video data as much as one video segment into an SRAM 201 and executes a VLD process for decoding the input data separately at three stages of a DCT unit, a macroblock unit, and a video segment unit with reference to the VLD conversion table 204. The IQ processor 205 executes a data shifting process to a predetermined area in 64 data as one DCT unit. The inverse weight processor 206 executes an inverse weighting process by using coefficients which are larger as they are away from a DC component in zigzag scanning order in one DCT. The IDCT processor 207 executes a process for calculating 64 amplitude components from 64 frequency components obtained after completion of the inverse weighting process in accordance with a predetermined calculating expression.

It is assumed that all of the above processes are managed by the input processing clock enable signal and the system clock which are outputted from the input signal processing frequency dividing circuit 115. Since details of each process in the video processor 109 have been described in the foregoing DV standard specifications, their detailed explanation is omitted here.

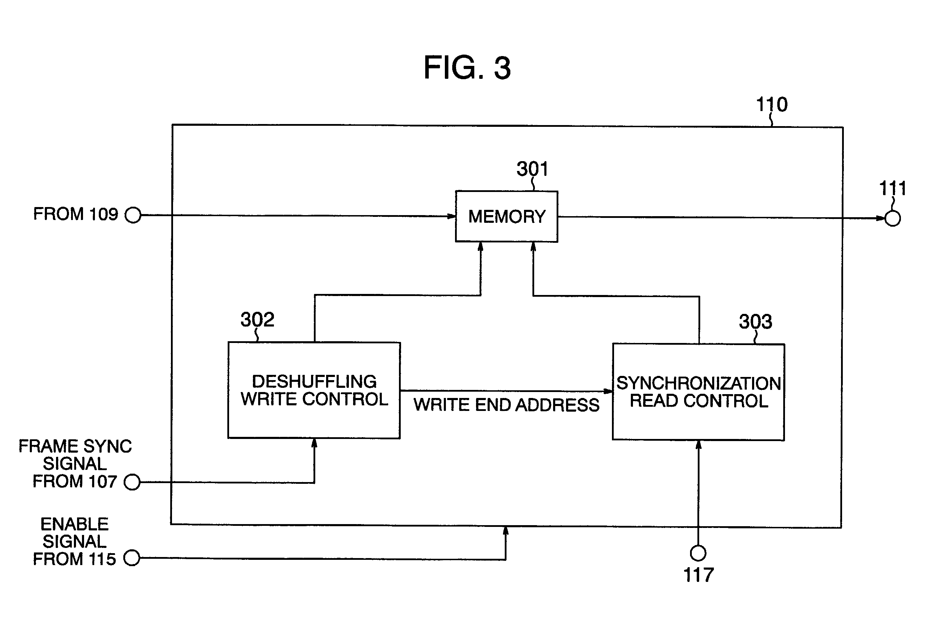

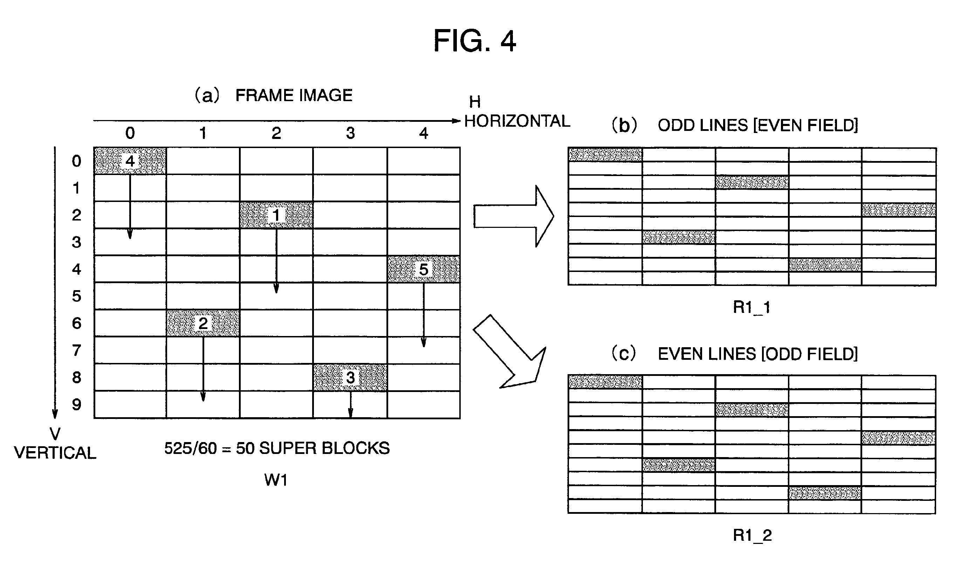

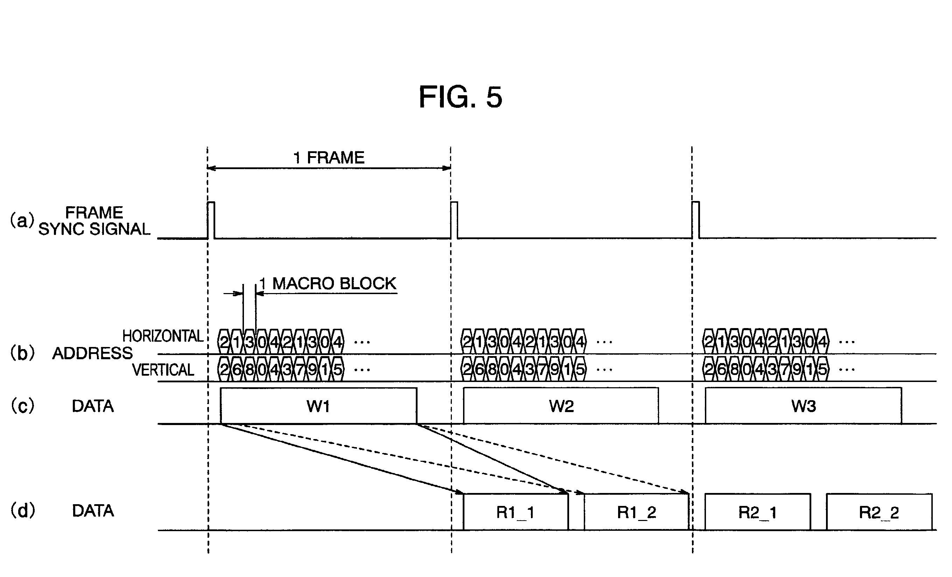

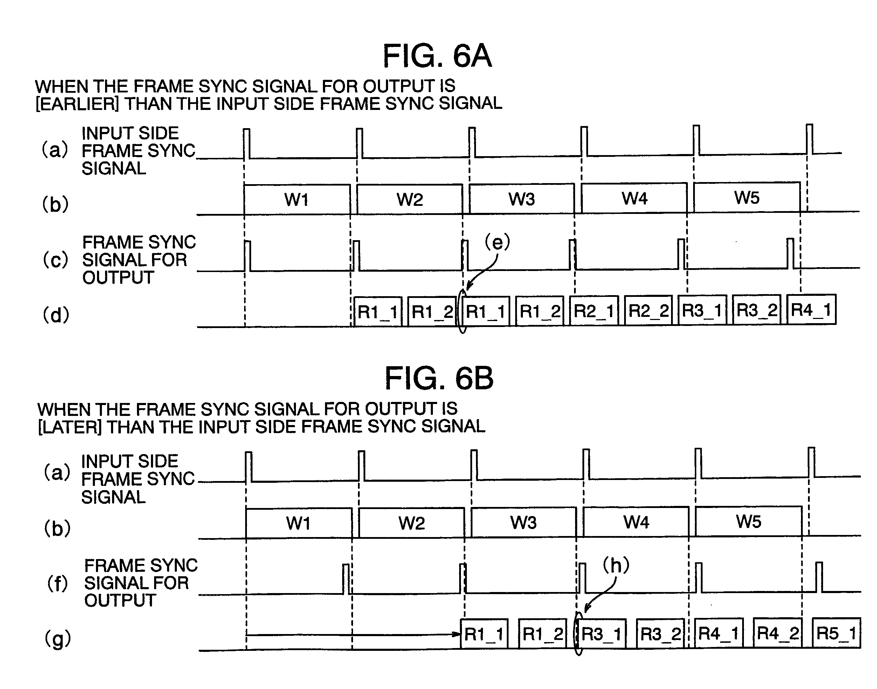

The operation of the video synchronizer 110 in the video processing unit 103 will now be described with reference to Fig. 3. In Fig. 3, reference numeral 301 denotes the memory; 302 a deshuffling write control signal generator; and 303 a synchronization read control signal generator. The memory 301 has a capacity of at least two or more frames. An outline of a video deshuffling process will be explained with reference to Figs. 4 and 5. An outline of the synchronizing operation will be explained with reference to Figs. 6A and 6B.

Fig. 4 is an explanatory diagram for explaining a video deshuffling principle. In Fig. 4, (a) denotes a frame image showing an array and an order of data which is outputted from the video processing unit 103, (b) denotes a field image obtained by collecting odd lines from the frame image (a), and (c) denotes a field image obtained by collecting even lines from the frame image (a), respectively. Fig. 5 shows timings for write data and read data into/from the memory 301 in the video deshuffling process, respectively. (a) shows an input side frame sync signal; (b) shows a write address in the memory 301; (c) shows a write signal for the memory 301; and (d) shows a read signal for the memory 301, respectively.

According to the deshuffling process in the video synchronizer 110, the video signal of the frame image shown in Fig. 4(a) is rearranged to the signals of the field images shown in Figs. 4(b) and 4(c). As shown in Fig. 4(a), the processed signals are outputted from the video processing unit 103 from the top toward the bottom in order written as 1, 2, 3, 4, and 5 in the diagram on the basis of a unit called a super block obtained by dividing a picture plane into 50 super blocks. In order to execute a writing process while mapping to a position on the memory where the data should inherently be displayed, the deshuffling write control signal generator 302 generates horizontal and vertical addresses in order shown in Fig. 5(b). Since the shuffling process conforms with the standard such that it is once circulated per frame, the data of one frame is written into the memory 301 as shown in Fig. 5(c). Since the address generation at the time of writing the data into the memory 301 can be realized by executing the process according to a rule opposite to the shuffling rule described in the DV standard specification, its detailed description is omitted here.

As for the signal processes which are executed in a range from the input processing unit 102 to this point, it is assumed that processes in which the input side frame sync signal that is outputted from the IEEE1394 interface processor 107 is used as a reference are executed.

Subsequently, the synchronization read control signal generator 303 executes a control such that the video signals written as frame images into the memory 301 are read out in order of the video signal of the odd lines shown in Fig. 4(b) (even field) and the video signal of the even lines shown in Fig. 4(c) (odd field) (refer to Fig. 5(d)). At this time, the synchronization read control signal generator 303 starts a read control by using the frame sync signal for output which is obtained from the frequency dividing circuit 117 for video output frame synchronization generation as a reference signal. The frame sync signal for output is a signal indicative of the frame reference timing on the output side.

A relation between the input side frame sync signal that is outputted from the IEEE1394 interface processor 107 and the frame sync signal for output which is obtained from the frequency dividing circuit 117 will now be described with reference to Figs. 6A and 6B.

Figs. 6A and 6B are timing charts showing the relations among the input side frame sync signal, the frame sync signal for output, and the input/output data of the memory 301 at the time of the synchronizing operation separately with respect to a case 1) where the frame sync signal for output is earlier than the input side frame sync signal (Fig. 6A) and a case 2) where the frame sync signal for output is later than the input side frame sync signal (Fig. 6B). As mentioned above, the input side frame sync signal is formed on the basis of the time information (SYT) in the CIP header information, and the frame sync signal for output is outputted from the frequency dividing circuit 117 on the basis of the reference clock. In Figs. 6A and 6B, (a) shows the input side frame sync signal, (b) shows the write signal for the memory 301, (c) and (f) show the frame sync signal for output, and (d) and (g) show the read signal for the memory 301, respectively.

For example, as DV data which is inputted via the IEEE1394 bus, it is possible to presume various cases such as output of a digital video cassette recorder connected to the outside, output of data stored in a personal computer, and the like. Therefore, if there is a small difference between the frequency of the system clock used in the invention and a frequency of an oscillator built in the external device, a deviation also occurs in the frame sync signal serving as a reference. For example, if the system clock which is used in the invention is set to a slightly high frequency, there is a case where the writing and reading operations to/from the memory 301 enter a relation in which they race at timing shown in Fig. 6A. If it is set to a low frequency, there is a case where they enter such a relation at timing shown in Fig. 6B.

To prevent such a situation, according to the invention, an address in which the writing operation is finished at write end timing (hereinafter, such an address is referred to as w_end) is outputted from the deshuffling write control signal generator 302 to the synchronization read control signal generator 303. In response to the address w_end, at read start timing, the synchronization read control signal generator 303 performs a control to read out the signal of the frame in which the writing operation has already been finished. That is, in the relation between (b) and (d) in Fig. 6A, at timing shown in (e), since the writing operation of the data of the second frame is not finished yet, the read control is performed so as to output the data of the first frame again. In the relation between (b) and (g) in Fig. 6B, at timing shown in (h), since the writing operation of the data of the third frame has already been finished, in spite of the fact that the data of the second frame is not read out yet, the read control is performed so as to jump to the data of the third frame by skipping the data of the second frame and output it. As mentioned above, according to the invention, by executing what is called a frame synchronizing operation, it is possible to obtain the output locked with the frame synchronization for output having a relation in which it is asynchronous with the input DV data.

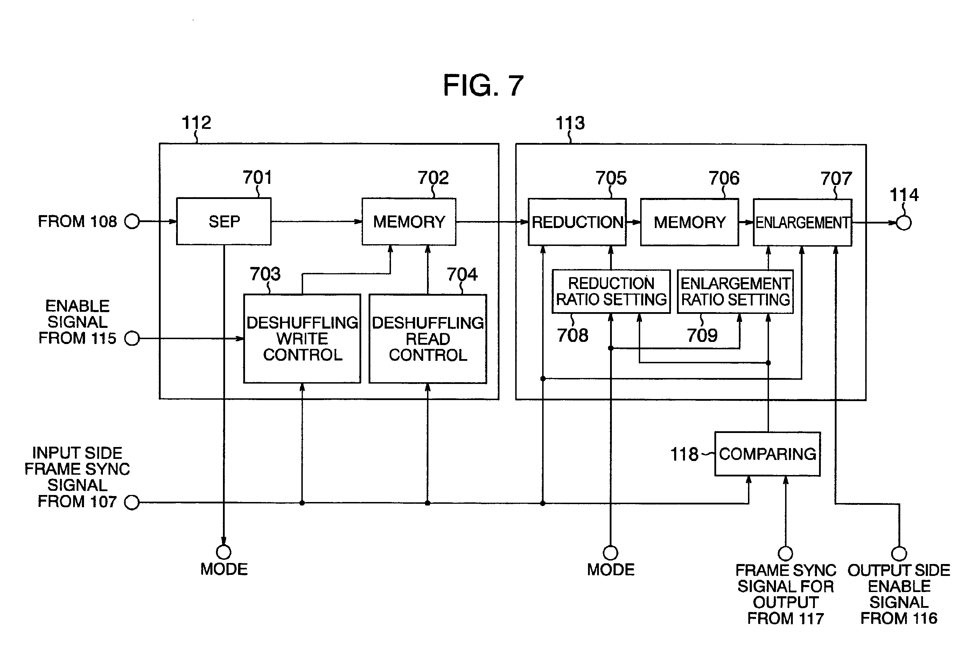

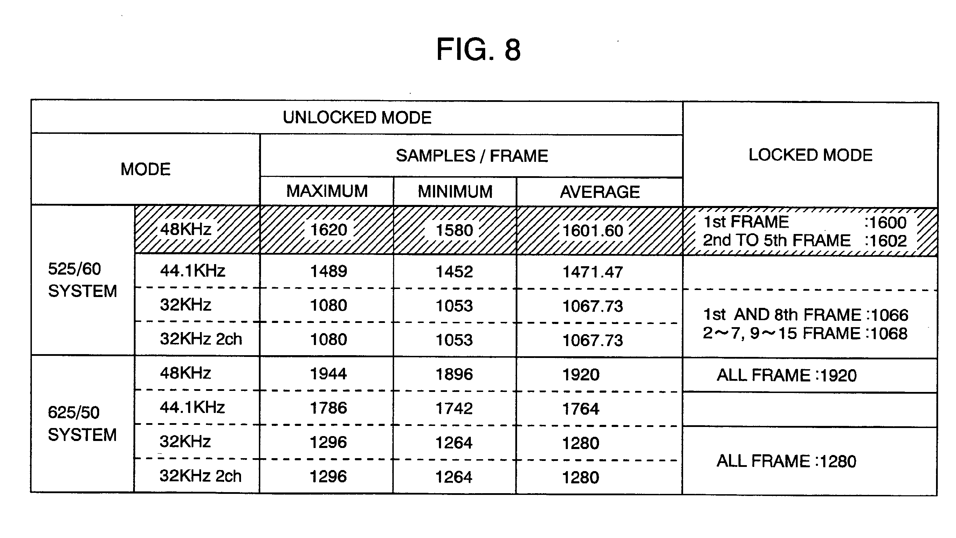

The audio processing unit 104 will now be described with reference to Figs. 7 and 8. First, an outline of a standard of the audio signal will be described here with reference to Fig. 8. In the audio processing unit 104, the number of audio samples of one frame using the frame sync signal for output as a reference is regarded as one frame unit and a sampling transforming process is executed. If the synchronization based on the frame unit as mentioned in the video signal is performed with respect to the audio signal, there are the following problems. Even if the video signal is skipped by an amount corresponding to one frame and reproduced, one frame of 1/60 is merely lost, so that it is visually inconspicuous. However, if the audio signal is skipped by an amount corresponding to one frame, an audio sound showing discontinuity such as "snap" in which the skipped portion is discontinuous or the like is conspicuous, so that it is not practical. Therefore, it is assumed that in case of the audio signal, the number of audio samples of one frame using the frame sync signal for output as a reference is regarded as one frame unit and the sampling transforming process is executed.

Fig. 8 shows the standard of the audio signal. According to the standard of the audio of the DV, four kinds of modes of sampling frequencies 48 kHz, 44.1 kHz, 32 kHz, and 32 kHz-2ch exist for two kinds of systems of the 525/60 system (NTSC) and the 625/50 system (PAL). In each of those modes, a permission range of the number of samples (Audio Frame size: hereinafter, referred to as AF_SIZE) per frame has been predetermined. For example, in case of the 525/60 system and the 48 kHz mode, AF_SIZE is set to the size of (minimum: 1580 samples, maximum: 1620 samples, average: 1601.6 samples). As mentioned above, the mode in which AF_SIZE is deviated from the average value, that is, the mode in which the frame frequency of the video and the sampling frequency of the audio are not held to a predetermined rate is called an unlocked mode. The unlocked mode is peculiar to the DV standard and not permitted in the DVD standard or the TS (Transport Steam) of MPEG (Moving Picture Experts Group). Therefore, in case of connecting this signal to the external device, it is necessary to keep an average rate of one frame period constant and output the signal in a state where it is locked with the video signal, that is, in the locked mode.

In the audio processing unit, therefore, it is necessary to execute a sampling transforming process (reducing or enlarging process) in order to once deshuffle the audio data which is outputted synchronously with the system clock by an amount corresponding to the number of samples in the unlocked mode and finally output it by a clock enable signal for an audio process corresponding to the sampling clock in the locked mode. The sampling transforming process denotes that the number of samples is transformed, that is, the number of samples is corrected by executing the reducing or enlarging process of the audio signal.

In this instance, as shown in Fig. 8, for example, in case of the 525/60 system and the 48 kHz mode, a mode in which the first one frame is set to 1600 samples, each of the second to fifth frames is set to 1602 samples, and by repeating them, the average rate of one frame is held constant is defined as a locked mode. Those numbers of samples are necessary for locking the audio signal with the video signal on the assumption that the video signal output synchronized with the input signal exists.

For example, as shown in Fig. 6A, when the frame sync signal for output is earlier than the input side frame sync signal, since the video signal output synchronized with the frame sync signal for output is obtained, it is necessary that the average rate of the audio data in one frame period is held constant for the video signal. That is, in case of using the clock which is asynchronized with the input signal, irrespective of the locked/unlocked mode, it is necessary to output the audio data of AF_SIZE at the predetermined average rate in one frame period of the frame sync signal for output.

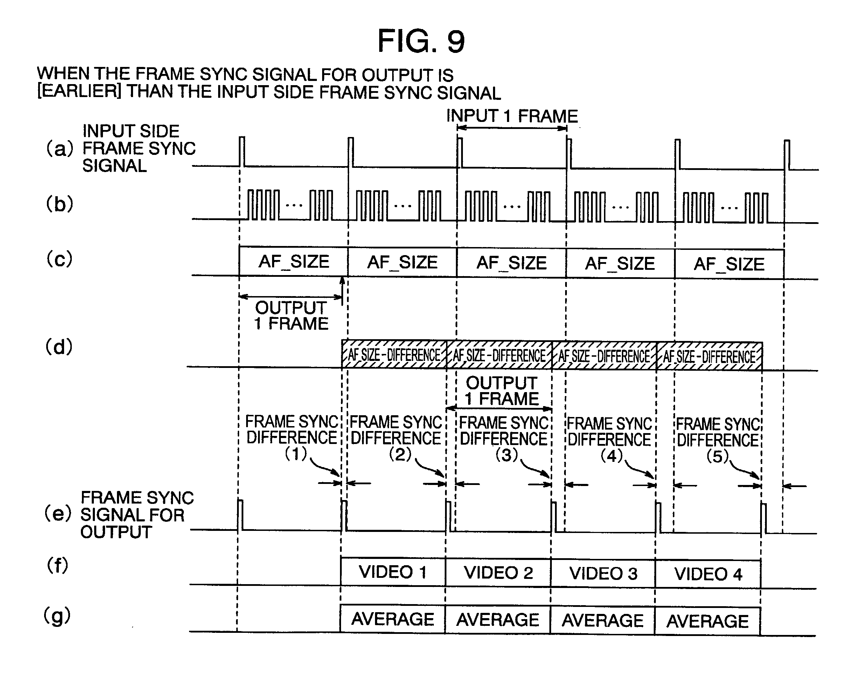

According to the invention, the frame sync signal for output is compared with the input side frame sync signal irrespective of the locked/unlocked mode and the sampling transforming process (reducing or enlarging process) is executed by using a difference between them, thereby keeping the average rate of one frame constant and obtaining an output signal corresponding to the locked mode. A construction of a circuit for specifically realizing the above operation will now be described with reference to Figs. 7 and 9.

Fig. 7 shows a constructional example of the audio processing unit 104. In the diagram, reference numeral 701 denotes a separation processor for selectively outputting the audio data and audio auxiliary data; 702 and 706 memories; 703 a deshuffling write control signal generator; 704 a deshuffling read control signal generator; 705 a reduction processor; 707 an enlargement processor; 708 a reduction ratio setting unit; and 709 an enlargement ratio setting unit. The component elements 705, 706, 707, 708, and 709 are collectively referred to as a sampling transform processor 113.

In the audio processor 112 in the audio processing unit 104 in Fig. 7, the audio data which is outputted from the signal separation processor 108 in the input processing unit 102 is separated into the audio auxiliary information and the audio signal by the separation processor 701 and outputted. Between them, information regarding the AF_SIZE, distinction between NTSC/PAL, and audio mode included in the audio auxiliary information, that is, information regarding the distinction among four kinds of sampling frequencies, and the like is outputted as a mode signal.

In the mode signal, the frequency dividing circuit 116 for the audio signal outputting process shown in Fig. 1 receives the information of the audio mode, forms a clock enable signal for an audio process of a predetermined sampling frequency (for example, in case of the 48 kHz mode and the system clock of 54 MHz, an enable signal of 48 kHz obtained by frequency dividing the signal of 54 MHz into 1/1125) by frequency dividing the system clock asynchronized with the input signal, and outputs the formed clock enable signal to the enlargement processor 707 in the sampling transform processor 113.

The deshuffling write control signal generator 703 and deshuffling read control signal generator 704 perform a control for writing and reading the audio data which is outputted from the separation processor 701 while mapping it in accordance with the DV standard in a manner similar to the video deshuffling process and executes a process for rearranging it into inherent data order.

The sampling transform processor 113 executes a sampling transformation of the audio signal by performing a process for increasing or decreasing the number of samples of the audio signal, that is, the enlarging/reducing process. With respect to a principle of the enlarging/reducing process, for example, by using the method disclosed in JP-A-7-015661 or JP-A-7-007723, the audio data can be enlarged or reduced at an arbitrary magnification.

A period of the phase difference between the input side frame sync signal and the frame sync signal for output is set to, for example, periods shown by frame sync differences (1), (2), (3), ... in Fig. 9. By obtaining a difference between arbitrary two adjacent sync differences (frame sync difference (1) - frame sync difference (2) = phase difference period (sign +: the phase which is later than the input, -: the phase which is earlier than the input)), the phase difference period can be easily obtained. In this case, the audio input signal period can be obtained by subtracting the number of samples of the audio input signal corresponding to the phase difference period from AF_SIZE included in the audio auxiliary information.

The foregoing principle of the sampling transforming process will be described with reference to Fig. 9 and by using specific numerical value examples together with the construction of the sampling transform processor 113. In Fig. 9, (a) shows the input side frame sync signal, (b) shows the write signal of the memory 702, and (c) shows the audio data of one frame in the case where the input side frame sync signal is used as a reference. As mentioned above, AF_SIZE denotes the number of samples of one frame obtained from the auxiliary information. (d) shows one frame in which the frame sync signal for output is used as a reference. The AF_SIZE difference denotes the number of samples included in one frame in which the frame sync signal for output is used as a reference, (e) shows the frame sync signal for output. (f) shows the output of the video signal. (g) shows the read signal of the memory 301. It is now assumed that the input side is set to a standard similar to the DV standard, that is, a frequency of the frame sync signal is equal to 29.97 Hz, a frequency in the audio mode is set to 48 kHz, the AF_SIZE is set to 1580 samples and the average is set to 1601.6 samples in the unlocked mode, an oscillating frequency of the fixed clock generator 106 is set to 54.1 MHz (frequency that is "higher" than the inherent frequency 54 MHz), and a frequency of the frame sync signal for output is set to (54.1MHz/4)/858dots/525lines = 30.025 Hz.

The phase comparator 118 receives the input side frame sync signal and the frame sync signal for output, obtains the phase difference period, and outputs it to the reduction ratio setting unit 708 and enlargement ratio setting unit 709. For example, in this case, since the frequency of the frame sync signal for output is equal to 30.025 Hz, the phase difference period is equal to

$$1/(54.1\text{MHz}/4)/858\text{dots}/525\text{lines}) -$$

$$1/(54\text{MHz}/4)/858\text{dots}/525\text{lines})$$

$$= -0.000061675 \text{ sec}$$

By transforming it into the number of audio samples on the input side,

$$29.97 \text{ Hz} \times 1580 \text{ samples} = 47.3526 \text{ kHz}$$

is obtained. Therefore,

$$-0.000061675 \text{ sec} \times 47.3526 \text{ kHz} = -2.92 \text{ samples}$$

(transformed value of the phase difference period) That is, in this case, it is necessary to form 1601.6 samples as an average size from (1580 - 2.92 = 1577.08) samples of the input audio signal.

The phase comparator 118 can be constructed by, for example: a counter for counting the periods corresponding to the frame differences (1), (2), (3), ... in Fig. 9 by the system clock by using input side frame sync signal and the frame sync signal for output; a register for holding a count value; a subtractor for subtracting the count value in the register; a coefficient device for transforming a value obtained from the subtractor into the number of audio samples; and the like. However, it is not limited to such a construction but any construction can be used so long as the phase difference period can be detected.

In the reduction ratio setting unit 708 and enlargement ratio setting unit 709, the sign of the phase difference period which is inputted is discriminated, the number of samples transformed from the phase difference period is added or subtracted to/from AF_SIZE (when the sign of the phase difference period is +: addition, when it is -: subtraction), thereby calculating the audio input signal period. On the basis of the values of the audio input signal period and average, the on/off of the reducing/enlarging operations are controlled and, at the same time, a predetermined reduction ratio or enlargement ratio calculated from the audio input signal period and average is set.

That is,

(1) Condition to turn on the enlarging process (turn off the reducing process):

[audio input signal period] < [average]

(2) Condition to turn off the enlarging process (turn on the reducing process):

[audio input signal period] > [average]

In this case, [average] = 1601.6 samples since [audio input signal period] = 1577.08 and the condition (1) mentioned above is satisfied, so that the enlarging process is performed.

For example, since the maximum value of the number of audio samples is equal to 1944 from Fig. 8 and the deviation of the frequency is actually very small, in other words, a difference between the total numbers of samples before and after the reducing/enlarging process is very small, if 2048 ($2^N \geq 1944$) is selected as resolution ability of the phase of an interpolating process such as reduction/enlargement, an enlargement set value in this case is equal to

$$X = 2048 \, (1 - 1/(1601.6/1577.08)) = 31.35$$

because the enlargement ratio = $2048/(2048 - X)$.

That is, the enlarging process used here in this case corresponds to a process such that an interval between two samples is divided into 2048 equal parts and interpolation signals at positions where a phase is shifted by every "31.35" are formed. The device operates so as to repeat the audio output data in the memory 706 at timings when an accumulation value of the enlargement set value "31.35" exceeds 2048.

If the reducing process is set here, interpolation data is formed by decimating the data at predetermined periods, the data is written into the memory 706, and the data is outputted in accordance with the audio processing clock enable signal which is obtained from the frequency dividing circuit for an audio signal outputting process 116. At this time, a reduction set value is set to

$$2048/(2048 + X) = \text{reduction ratio}$$

from a principle similar to that in case of the enlargement set value.

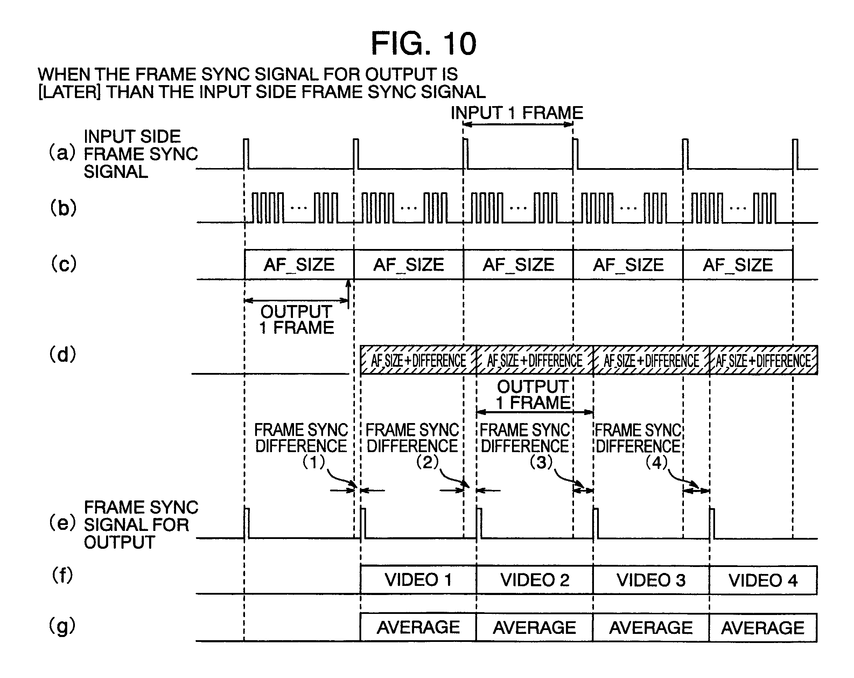

A case where the phase of the frame sync signal for output is "later" than the input side frame sync signal will now be described with reference to Fig. 10 in a manner similar to that mentioned above. In Fig. 10, (a), (b), (c), (d), (e), (f), and (g) denote substantially the same meanings as those shown in Fig. 9.

Also in the case of this example, in a manner similar to Fig. 9, it is necessary to form the audio signal output shown in Fig. 10(g) by using the audio input signal corresponding to one frame period of the frame sync signal for output shown in Fig. 10(d).

In a manner similar to Fig. 9, the foregoing principle of the sampling transforming process will be described by using specific numerical value examples together with the construction of the sampling transform processor 113. In Fig. 10, it is now assumed that the input side is set to a standard similar to the DV standard, that is, a frequency of the frame sync signal is equal to 29.97 Hz, a frequency in the audio mode is set to 48 kHz, the AF_SIZE is set to 1580 samples and the average is set to 1601.6 samples in the unlocked mode, the oscillating frequency of the fixed clock generator 106 is set to 53.9 MHz (frequency that is "later" than the inherent frequency (54 MHz)), and a frequency of the frame sync signal for output is set to

$$(53.9 \text{MHz}/4)/858 \text{dots}/525 \text{lines} = 29.91 \text{ Hz}.$$

The phase comparator 118 receives the input side frame sync signal and the frame sync signal for output, obtains the phase difference period, and outputs it to the reduction ratio setting unit 708 and enlargement ratio setting unit 709. For example, in this case, since the frequency of the frame sync signal for output is equal to 29.91 Hz, the phase difference period is equal to

$$1/(53.9 \text{MHz}/4)/858 \text{dots}/525 \text{lines}) -$$

$$1/(54 \text{MHz}/4)/858 \text{dots}/525 \text{lines})$$

$$= +0.000015476 \text{ sec}$$

By transforming it into the number of audio samples on the input side,

$$29.97 \text{ Hz} \times 1580 \text{ samples} = 47.3526 \text{ kHz}$$

is obtained. Therefore,

$$+0.000015476 \text{ sec} \times 47.3526 \text{ kHz} = +0.73 \text{ samples}$$

(transformed value of the phase difference period) That is, in this case, it is necessary to form 1601.6 samples as an average size from (1580 + 0.73 = 1580.73) samples of the input audio signal. In this case, the enlarging process for enlarging from 1580.73 samples to 1601.6 samples is executed. Therefore, in a manner similar to the above, an enlargement set value is equal to

$$X = 2048 \, (1 - 1/(1601.6/1580.73)) = 26.68$$

because the enlargement ratio = $2048/(2048 - X)$. That is, the enlarging process in this case corresponds to a process such that an interval between two samples is divided into 2048 equal parts and interpolation signals at positions where a phase is shifted by every "26.68" are formed. The device operates so as to repeat the audio output data in the memory 706 at timings when an accumulation value of the enlargement set value "26.68" exceeds 2048.

In the description of Figs. 9 and 10, although nothing is mentioned with respect to precision below a decimal point, such precision can be set to an arbitrary value in dependence on a limitation of a circuit scale of an LSI which is formed, the frequency of the system clock which is actually used, and the like. It is not limited to the second decimal place as mentioned above.

By executing the foregoing processes, the audio output signal whose average rate is set to the average size can be obtained and the average number of samples for one frame period can be held constant.

By the above processes, the average number of samples of the audio output is held constant by the audio processing clock enable signal formed on the basis of the system clock.

Although the embodiment has been described with respect to the example in which the audio input signal is not compressed, if the audio input signal is a compressed signal, it is sufficient to provide a decompressing circuit between the memory 702 and reduction processor 705 and decompress the compressed audio data.

As mentioned above, by processing the video signal and the audio signal by the enable signal formed from one system clock, although the device is apparently made operative by a plurality of enable signals, the whole system is eventually made operative by one clock. According to the invention, since the video signal is synchronized on a frame unit basis, the head portion of the video data of one frame is the same as that on the input side. However, since the audio signal is not synchronized on a frame unit basis, the number of audio samples of one frame in which the frame sync signal for output is used as a reference is regarded as one frame unit and the sampling transforming process is executed. Therefore, as for the audio data which is outputted from the digital signal processing device of the embodiment, on the input side, the data existing at the head of one frame of the audio data is not always located at the head of one frame in the outputted audio data but is outputted to a deviated position such as intermediate position, position near the last position, or the like of one frame of a different frame. As mentioned above, as for the video signal and the audio signal, since the video signal is synchronized on a frame unit basis and the audio signal is synchronized by using the frame sync signal for output as a reference, although those signals are different signals when they are seen on the inputted frame unit basis, the synchronized signals are outputted when they are seen as a whole.

According to the embodiment, as shown in the conventional example, the video and audio signals can be decoded by using a single asynchronous clock without using a plurality of PLLs and oscillators. Therefore, in case of integrating those digital circuits to an LSI, the design efficiency can be relatively easily improved and the stable operation can be relatively easily guaranteed. Further, since one clock is used, timing design and timing verification at the time of designing the LSI can be easily performed. Moreover, the crosstalks between the clocks are also eliminated, the circuit board can be designed while reducing the factors of generation of the noises, the board designing technique for suppressing the noises can be reduced, and the number of parts and the like to prevent interference can be also reduced.

Since no PLL is used, the number of external pins for the PLL can be also reduced, manufacturing costs for the LSI can be reduced, and at the same time, the number of parts of the circuit board on which it is mounted can be also reduced. An increase in manufacturing costs can be prevented.

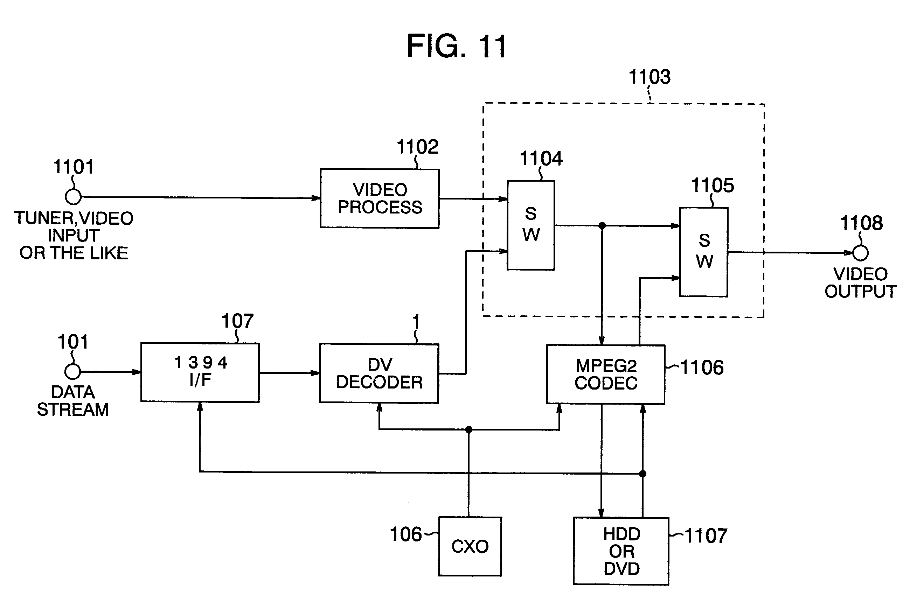

A hard disk recorder as an example of a recording device to which the digital signal processing device described in the embodiment is applied will now be explained with reference to Fig. 11.

In Fig. 11, the component elements designated by the same reference numerals as those in Fig. 1 have similar functions and their descriptions are omitted here. Reference numeral 1101 denotes an analog input terminal, an S input terminal, or a digital input terminal to which an analog signal as data that is outputted from a tuner of a satellite broadcast or the like, that is, data of a format other than IEEE1394 or a digital signal according to BT656 is inputted. Reference numeral 1102 denotes a video/audio signal processing circuit for executing a video signal process and an audio signal process; 1104 a switch for selecting one of outputs of the video/audio signal processing circuit 1102 and DV decoder 1; and 1106 an MPEG compression/decompression processing circuit for compressing the data selected by the switch 1104 by MPEG2 and recording it onto a hard disk (HDD) 1107 as a recording medium. The MPEG compression/decompression processing circuit is also made operative by the reference clock outputted from the CXO 106. The signal recorded on the HDD 1107 is read out and decompressed by the MPEG compression/decompression processing circuit 1106. Reference numeral 1105 denotes a switch for selecting one of the data selected by the switch 1104 and the data outputted from the MPEG compression/decompression processing circuit 1106. Reference numeral 1108 denotes an output terminal for outputting the data outputted from the switch 1105 to the outside. The switches 1104 and 1105 are collectively referred to as a switching circuit 1103.

The operation of the hard disk recorder in the embodiment will be explained as follows. First, the video signal and the audio signal are inputted from the tuner of the satellite broadcast or the like to the input terminal 1101 and processed by the video/audio signal processing circuit 1102. The video/audio data outputted in the IEEE1394 format is processed by the IEEE1394 interface processor 107 and the DV decoder as mentioned in the above embodiment. The signal which is synchronous with the reference clock asynchronized with the signal inputted from the outside and conforms with the locked mode in which the audio signal is synchronized with the video signal is obtained. One of the input signals is selected by the switch 1104. Upon such a selection, it is possible to automatically detect the input of the signals and switch them or they can be switched by using a select button (not shown) for selecting one of those signals in response to an instruction from the user. The data selected by the switch 1105 is compressed by the MPEG compression/ decompression processing circuit 1106. The compressed data is recorded onto the hard disk (HDD) 1107 as a recording medium by a recording unit (not shown). The signal recorded on the HDD 1107 is read out and decompressed by the MPEG compression/decompression processing circuit 1106. Since a compression ratio of the data compressed according to the DV standard is lower than that of the data compressed by MPEG2, the compressed data having a high compression ratio and high recording efficiency can be obtained by compressing the data in accordance with MPEG2. The compressed data recorded on the HDD 1107 is read out and decompressed by the MPEG compression/decompression processing circuit 1106. The switch 1105 selects one of the data selected by the switch 1104 and the data outputted from the MPEG compression/decompression processing circuit 1106. Upon such a selection, it is possible to automatically detect the input of the signals and switch them or they can be switched by using a select button (not shown) for selecting one of those signals.

The selected signal is outputted to a device such as a TV or the like having a display function and a recording function from the video/audio output terminal 1108 and reproduced. Upon output, the signal can be converted into a signal suitable for a Hi Vision TV or subjected to a signal converting process from NTSC to PAL. The compressed data read out from the HDD 1107 can be also outputted to the outside by the IEEE1394 interface and supplied to a personal computer.

According to the embodiment, even in the MPEG compression which does not correspond to the unlocked mode of the DV standard as mentioned above, the compressing process is possible. Even in a device such as TV, personal computer, or the like which does not correspond to the unlocked mode of the DV standard, the signal according to the synchronous mode is outputted. Therefore, there is an effect such that the audio signal can be correctly reproduced. Further, in a manner similar to the foregoing embodiment, according to the DV decoder in the embodiment, since the signal can be processed by the oscillator of one clock and no PLL is used, in case of constructing a system using the DV decoder together with another MPEG compression/ decompression processing circuit, IEEE1394, or the like, interference by the clock can be reduced and restriction in case of designing the circuit board is lightened, so that there is an effect such that a degree of freedom of design can be raised. Also in system products such as an HDD recorder and the like, the use of the DV decoder for processing data by one clock is significant. If the MPEG compression/decompression processing circuit is integrated together with the DV decoder and the oscillator is used in common by the DV decoder and the MPEG compression/decompression processing circuit, the circuit can be further simplified. Total costs for the whole system can be reduced.

Although the embodiment has been described with respect to the hard disk recorder, the recording medium is not limited to the HDD but another medium such as a DVD or the like can be also used.

As described above, according to the invention, the video and audio signals can be decoded by using a single asynchronous clock without using a plurality of PLLs and oscillators as shown in the conventional example. Therefore, in case of integrating those digital circuits into an LSI, the design efficiency can be relatively easily improved and the stable operation can be relatively easily guaranteed. Since one clock is used, the timing design and timing verification upon LSI designing can be easily performed and, at the same time, the crosstalks between the clocks are also eliminated and the board design in which the factors of generation of the noises are suppressed can be realized.

Since no PLL is used, the number of external pins for PLL can be suppressed, the manufacturing costs for the LSI can be suppressed, the number of parts of the circuit board on which the LSI is mounted can be also reduced, and an increase in manufacturing costs can be prevented.

While we have shown and described several embodiments in accordance with our invention, it should be understood that disclosed embodiments are susceptible of changes and modifications without departing from the scope of the invention. Therefore, we do not intend to be bound by the details shown and described herein but intent to cover all such changes and modifications a fall within the ambit of the appended claims.

It should be further understood by those skilled in the art that the foregoing description has been made on embodiments of the invention and that various changes and modifications may be made in the invention without departing from the spirit of the invention and the scope of the appended claims, as interpreted by the description and drawings.

## Claims

1. A digital signal processing device for processing a video signal and an audio signal to each of which time information for synchronization has been added and outputting the processed signals, comprising:

   a clock generator (106) for generating a reference clock without referring to said time information for synchronization;
   a video signal processing unit (103) which is made operative by said reference clock, executes a decoding process of the inputted video signal, and performs synchronization, on a frame unit basis, of input side frame reference timing which is obtained on the basis of said time information for synchronization and frame reference timing for output which is obtained by frequency dividing said reference clock; and

an audio signal processing unit (104) which is made operative by said reference clock and executes a sampling transformation in a manner such that a decoding process of the audio signal is executed, a difference between periods of said input side frame reference timing and said frame reference timing for output is detected, and the number of samples is corrected in accordance with the detected period difference.

2. A device according to claim 1, wherein

said video signal processing unit (103) operates in a manner such that in the case where said frame reference timing for output is earlier than said input side frame reference timing, a frame which has already been outputted is repetitively outputted and in the case where said frame reference timing for output is later than said input side frame reference timing, the frames are decimated and outputted, and

said audio signal processing unit (104) operates in a manner such that in the case where said frame reference timing for output is earlier than said input side frame reference timing, a phase difference period is obtained from said input side frame reference timing and said frame reference timing for output, the number of samples of the audio signal corresponding to said phase difference period is subtracted from the number of samples of the input audio signal included in one frame period in which the input side frame reference timing is used as a reference, and by executing an enlarging or reducing process to the audio signal of the subtracted number of samples, the audio signal synchronized with said frame reference timing for output is outputted, and in the case where said frame reference timing for output is later than said input side frame reference timing, the phase difference period is obtained from said input side frame reference timing and said frame reference timing for output, the number of samples of the audio signal corresponding to said phase difference period is added to the number of samples of the input audio signal included in one frame period in which the input side frame reference timing is used as a reference, and by executing the enlarging or reducing process to the audio signal of the added number of samples, the audio signal synchronized with said frame reference timing for output is outputted.

3. A digital signal processing device for inputting a digital signal to which a time reference signal has been added, processing said signal, and obtaining a reproduction signal of a video image and an audio sound, comprising:

a clock signal generator (106) for generating a clock signal asynchronized with said time reference signal;

a frequency dividing unit (105) for frequency dividing the clock signal which is outputted from said clock signal generator (106) and generating a frame sync signal for output, a clock enable signal for an input process, and a clock enable signal according to an audio operating mode;

a digital interface processor (107) for separating a compressed video signal, an audio signal, auxiliary information, and an input side frame sync signal from the inputted digital signal in accordance with the clock enable signal for the input process which is outputted from said frequency dividing unit (105) and outputting them;

a video signal processing unit (103) for inputting the compressed video signal and the input side frame sync signal which are outputted from said digital interface processor (107) and the clock enable signal for the input process and the frame sync signal which are outputted from said frequency dividing unit (105), obtaining a video signal by performing a decoding process, and executing a synchronizing process to said frame sync signal for output which is outputted from said frequency dividing unit (105) and said input signal; and

an audio signal processing unit (104) for inputting audio information and the frame sync signal which are outputted from said digital interface processor (107), the clock enable signal for the input process and the input side frame sync signal which are outputted from said frequency dividing unit (105), the clock enable signal according to said audio operating mode, and said frame sync signal for output which is outputted from said frequency dividing unit (105), obtaining the audio signal by performing a signal process, and outputting the audio signal by the clock enable signal according to said audio operating mode which is outputted from said frequency dividing unit (105).

4. A device according to claim 3, wherein

said video signal processing unit (103) operates in a manner such that in the case where said frame sync signal for output is earlier than said input side frame sync signal, a frame which has already been outputted is repetitively outputted and in the case where said frame sync signal for output is later than said input side frame sync signal, the frames are decimated and outputted, and

said audio signal processing unit (104) operates in a manner such that in the case where said frame sync signal for output is earlier than said input side frame sync signal, a phase difference period is obtained from said input side frame sync signal and said frame sync signal for output, the number of samples of the audio signal corresponding to said phase difference period is subtracted from the number of samples of the input audio signal included in one frame period in which said input side frame sync signal is used as a reference, and by executing an enlarging or reducing process to the audio signal of the subtracted number of samples, the audio signal synchronized with said frame sync signal for output is outputted, and in the case where said frame sync signal for output is later than said input side frame sync signal, the phase difference period is obtained from said input side frame sync signal and said frame sync signal for output, the number of samples of the audio signal corresponding to said phase difference period is added to the number of samples of the input audio signal included in one frame period in which the input side frame sync signal is used as a reference, and by executing the enlarging or reducing process to the audio signal of the added number of samples, the audio signal synchronized with said frame sync signal for output is outputted.

5. A device according to claim 1, wherein said video signal and audio signal to which said time information for synchronization has been added are signals which were transmitted and inputted in a format of an IEEE1394 standard.

6. A device according to claim 3, wherein the digital signal to which said time reference signal has been added is a signal which was transmitted and inputted in a format of an IEEE1394 standard.

7. A DV decoder for processing an audio signal to which time information for synchronization has been added by a reference clock outputted from a clock generator (106) for generating the reference clock without referring to said time information for synchronization and outputting the processed audio signal, comprising:

   a frequency dividing unit (105) for forming a frame sync signal for output on the basis of said reference clock; and
   an audio signal processing unit (104) for executing a sampling transforming process of said inputted audio signal by setting the number of samples of one frame period in which said frame sync signal for output is used as a reference to the number of samples of one frame.

8. A DV decoder for processing a video signal and an audio signal to each of which time information for synchronization has been added by a reference clock outputted from a clock generator (106) for generating the reference clock without referring to said time information for synchronization and outputting the processed video and audio signals, comprising:

   a frequency dividing unit (105) for forming a frame sync signal for output on the basis of said reference clock;
   a video signal processing unit (103) for processing said inputted video signal and outputting the video signal synchronized with said frame sync signal for output; and
   an audio signal processing unit (104) for executing a sampling transforming process of said inputted audio signal in a manner such that the number of samples of one frame period in which said frame sync signal for output is used as a reference is equal to the predetermined number of samples.

9. A DV decoder for inputting a video signal, an audio signal, auxiliary information, and an input side frame sync signal, processing said video signal and said audio signal by a reference clock which is asynchronous with said input side frame sync signal and is outputted from a clock generator (106), and outputting the processed video and audio signals, comprising:

   a frequency dividing unit (105) for forming a frame sync signal for output on the basis of said reference clock;
   a video processing unit (103) for frame synchronously processing said inputted video signal and forming the video signal synchronized with said frame sync signal for output; and
   an audio processing unit (104) for comparing said input side frame sync signal with said frame sync signal for output, setting the number of samples of one frame period which is obtained by subtracting or adding the number of samples corresponding to a difference between said input side frame sync signal and said frame sync signal for output from/to AF_SIZE obtained from said auxiliary information to the number of samples of one frame period, and executing a sampling transforming process of said inputted audio signal.

10. A DV decoder for inputting a video signal, an audio signal, auxiliary information, and an input side frame sync signal of a DV format, processing said video signal and said audio signal by a reference clock which is asynchronous with said input side frame sync signal and is outputted from a clock generator (106), and outputting the processed video and audio signals, comprising:

a separating unit (108) for separating said inputted video signal and audio signal;

a first frequency dividing unit (115) for forming an enable signal for an input process on the basis of said reference clock;

a second frequency dividing unit (116) for forming an enable signal for an audio signal process on the basis of said reference clock and sampling frequency information of said auxiliary information;

a third frequency dividing unit (117) for forming a frame sync signal for output on the basis of said reference clock;

a video signal processing unit (103) for frame synchronously processing the video signal separated by said separating unit (108) and outputting the video signal synchronized with said frame sync signal for output;

an audio signal processing unit (104) for writing the audio signal separated by said separating unit (108) into a memory in response to said enable signal for the input process and reading out said audio signal;

a comparing unit (118) for comparing said input side frame sync signal with said frame sync signal for output, adding or subtracting the number of samples of a period corresponding to a difference between said input side frame sync signal and said frame sync signal for output to/from AF_SIZE as said auxiliary information of said audio signal, and calculating the number of samples corresponding to one frame period of said frame sync signal for output; and

a sampling transform processor (113) for executing a transforming process of the number of samples to said audio signal outputted from said audio signal processing unit (104) by performing an enlarging or reducing process on the basis of a comparison result of said comparing unit (118) and outputting the audio signal in response to said enable signal for the audio signal process.

11. A DV decoder for processing a video signal and an audio signal to each of which time information for synchronization has been added by a reference clock outputted from a clock generator (106) for generating the reference clock without referring to said time information for synchronization and outputting the processed video and audio signals, comprising:

a frequency dividing unit (105) for forming a frame sync signal for output and a clock enable signal for an input process on the basis of said reference clock;

an input processing unit (102) for separating and outputting the video signal, the audio signal, and an input side frame sync signal from the inputted video signal and audio signal in response to the clock enable signal for the input process which is outputted from said frequency dividing unit (105);

a video processing unit (103) for processing the video signal which is outputted from said input processing unit (102) and forming the video signal synchronized with said frame sync signal for output; and

an audio signal processing unit (104) for executing a sampling transforming process to the audio signal which is outputted from said input processing unit (102) so that the number of samples of one frame period in which said frame sync signal for output is used as a reference is equal to the predetermined number of samples.

12. A DV decoder for processing a compressed video signal and an audio signal to each of which time information for synchronization has been added by a reference clock outputted from a clock generator (106) for generating the reference clock without referring to said time information for synchronization and outputting the processed video and audio signals, comprising:

a frequency dividing unit (105) for forming a frame sync signal for output and a clock enable signal for an input process on the basis of said reference clock;

an input processing unit (102) for separating and outputting the compressed video signal, the audio signal, auxiliary information, and an input side frame sync signal from the inputted compressed video signal and audio signal in response to the clock enable signal for the input process which is outputted from said frequency dividing unit (105);

a video processing unit (103) for decoding the compressed video signal which is outputted from said input processing unit (102) in response to said clock enable signal for the input process and forming the video signal which is frame synchronized with said frame sync signal for output; and

an audio processing unit (104) for executing a sampling transforming process to the audio signal which is outputted from said input processing unit (102) by setting the number of samples obtained by adding or subtracting the number of samples corresponding to a difference between said input side frame sync signal and said frame sync signal for output to/from AF_SIZE obtained from said auxiliary information to the number of samples of one frame period.

**13.** A device according to claim 3, wherein

said frequency dividing unit (105) has a first frequency dividing unit (115) for forming a clock enable signal for an input process on the basis of said reference clock, a second frequency dividing unit (116) for forming a clock enable signal for an audio signal process on the basis of said reference clock and sampling frequency information included in said auxiliary information, and a third frequency dividing unit (117) for forming a frame sync signal for output on the basis of said reference clock,

said input processing unit (102) has an IEEE interface unit (107) for separating and outputting the input side frame sync signal in response to said clock enable signal for the input process which is outputted from said first frequency dividing unit (115) and a signal separating unit (108) for separating the audio signal and the compressed video signal from the signal outputted from said IEEE interface unit (107),

said video processing unit (103) has a video processor (109) for decoding the compressed video signal which is outputted from said signal separating unit (108) and a video synchronizer (110) for performing a frame synchronizing process to the video signal outputted from said video processor (109) and forming the video signal synchronized with said frame sync signal for output, and

said audio processing unit (104) has a comparing unit (118) for comparing said input side frame sync signal with said frame sync signal for output, adding or subtracting the number of samples corresponding to a difference between said input side frame sync signal and said frame sync signal for output to/from AF_SIZE obtained from said auxiliary information, and calculating the number of samples of one frame period in which said frame sync signal for output is used as a reference and a sampling transform processor (113) for executing a sampling transforming process to said audio signal by performing an enlarging or reducing process by setting the number of samples calculated by said comparing unit (118) to the number of samples of one frame period.

**14.** A decoder according to claim 7, wherein the inputted audio signal is a signal in an unlocked mode in a DV standard, and said audio processing unit (104) transforms the number of samples into the number of samples which has been predetermined in a locked mode in the DV standard.

**15.** A decoder according to claim 8, wherein the inputted audio signal is a signal in an unlocked mode in a DV standard, and said audio processing unit (104) transforms the number of samples into the number of samples which has been predetermined in a locked mode in the DV standard.

**16.** A decoder according to claim 10, wherein the inputted audio signal is a signal in an unlocked mode in a DV standard, and said sampling transform processor (113) transforms the number of samples into the number of samples which has been predetermined in a locked mode in the DV standard.

**17.** A recording device comprising:

the DV decoder according to claim 7;
an MPEG compressing unit (1106) for compressing the video signal and the audio signal outputted from said DV decoder (1) by MPEG compression and forming compressed data; and
a recording unit (1107) for recording the compressed data outputted from said MPEG compressing unit (1106).

**18.** A recording device comprising:

the DV decoder according to claim 8;
an MPEG compressing unit (1106) for compressing the video signal and the audio signal outputted from said DV decoder (1) by MPEG compression and forming compressed data; and
a recording unit (1107) for recording the compressed data outputted from said MPEG compressing unit (1106).

**19.** A device according to claim 17, wherein said MPEG compressing unit (1106) executes a compressing process by the reference clock outputted from said clock generator (106).

**20.** A device according to claim 18, wherein said MPEG compressing unit (1106) executes a compressing process by the reference clock outputted from said clock generator (106).

**21.** A signal processing method in a DV decoder (1) for processing an inputted video signal and an inputted audio signal by a reference clock which is asynchronous with time information for synchronization added to said video signal and said audio signal, comprising the steps of:

inputting the video signal and the audio signal;
synchronizing said inputted video signal on a frame unit basis in response to said reference clock;
outputting the video signal which was synchronized on said frame unit basis;
sampling transforming said inputted audio signal in response to said reference clock; and
outputting the audio signal which was sampling transformed on a frame unit basis different from said time information for synchronization.

# FIG. 1

EP 1 289 305 A2

## FIG. 2

FIG. 2

109

VLD
CONVERSION
TABLE — 204

208 ─ SRAM

201

FROM ○ → SRAM → VLD → IQ → INVERSE
WEIGHT → IDCT → ○ TO
108                                                    110

203     205     206     207

202

SRAM
CONTROL

FRAME SYNC SIGNAL
FROM 107

ENABLE SIGNAL
FROM 115

EP 1 289 305 A2

## FIG. 3

FROM 109 →

**301** MEMORY → 111

**302** DESHUFFLING WRITE CONTROL — WRITE END ADDRESS → **303** SYNCHRONIZATION READ CONTROL

FRAME SYNC SIGNAL FROM 107

ENABLE SIGNAL FROM 115

117

110

EP 1 289 305 A2

# FIG. 4

(a) FRAME IMAGE

H
HORIZONTAL

(b) ODD LINES [EVEN FIELD]

R1_1

(c) EVEN LINES [ODD FIELD]

R1_2

V
VERTICAL

525/60 = 50 SUPER BLOCKS

W1

EP 1 289 305 A2

# FIG. 5

EP 1 289 305 A2

# FIG. 6A

WHEN THE FRAME SYNC SIGNAL FOR OUTPUT IS
[EARLIER] THAN THE INPUT SIDE FRAME SYNC SIGNAL

(a) INPUT SIDE FRAME SYNC SIGNAL

(b) | W1 | W2 | W3 | W4 | W5 |

(c) FRAME SYNC SIGNAL FOR OUTPUT — (e)

(d) | R1_1 | R1_2 | R1_1 | R1_2 | R2_1 | R2_2 | R3_1 | R3_2 | R4_1 |

# FIG. 6B

WHEN THE FRAME SYNC SIGNAL FOR OUTPUT IS
[LATER] THAN THE INPUT SIDE FRAME SYNC SIGNAL

(a) INPUT SIDE FRAME SYNC SIGNAL

(b) | W1 | W2 | W3 | W4 | W5 |

(f) FRAME SYNC SIGNAL FOR OUTPUT — (h)

(g) | R1_1 | R1_2 | R3_1 | R3_2 | R4_1 | R4_2 | R5_1 |

EP 1 289 305 A2

# FIG. 7

EP 1 289 305 A2

## FIG. 8

| | UNLOCKED MODE | | | | LOCKED MODE |
|---|---|---|---|---|---|
| MODE | | SAMPLES / FRAME | | | |
| | | MAXIMUM | MINIMUM | AVERAGE | |
| 525/60 SYSTEM | 48KHz | 1620 | 1580 | 1601.60 | 1st FRAME :1600<br>2nd TO 5th FRAME :1602 |
| | 44.1KHz | 1489 | 1452 | 1471.47 | |
| | 32KHz | 1080 | 1053 | 1067.73 | 1st AND 8th FRAME :1066<br>2~7, 9~15 FRAME :1068 |
| | 32KHz 2ch | 1080 | 1053 | 1067.73 | |
| 625/50 SYSTEM | 48KHz | 1944 | 1896 | 1920 | ALL FRAME :1920 |
| | 44.1KHz | 1786 | 1742 | 1764 | |
| | 32KHz | 1296 | 1264 | 1280 | ALL FRAME :1280 |
| | 32KHz 2ch | 1296 | 1264 | 1280 | |

EP 1 289 305 A2

# FIG. 9

WHEN THE FRAME SYNC SIGNAL FOR OUTPUT IS
[EARLIER] THAN THE INPUT SIDE FRAME SYNC SIGNAL

EP 1 289 305 A2

# FIG. 10

WHEN THE FRAME SYNC SIGNAL FOR OUTPUT IS
[LATER] THAN THE INPUT SIDE FRAME SYNC SIGNAL

INPUT 1 FRAME

(a) INPUT SIDE FRAME SYNC SIGNAL

(b)

(c)

| AF_SIZE | AF_SIZE | AF_SIZE | AF_SIZE | AF_SIZE |

OUTPUT 1 FRAME

(d)

| AF_SIZE+DIFFERENCE | AF_SIZE+DIFFERENCE | AF_SIZE+DIFFERENCE | AF_SIZE+DIFFERENCE |

OUTPUT 1 FRAME

FRAME SYNC DIFFERENCE (1)  FRAME SYNC DIFFERENCE (2)  FRAME SYNC DIFFERENCE (3)  FRAME SYNC DIFFERENCE (4)

(e) FRAME SYNC SIGNAL FOR OUTPUT

(f)

| VIDEO 1 | VIDEO 2 | VIDEO 3 | VIDEO 4 |

(g)

| AVERAGE | AVERAGE | AVERAGE | AVERAGE |

EP 1 289 305 A2

# FIG. 11

EP 1 289 305 A2